(19) Europäisches Patentamt / European Patent Office / Office européen des brevets

(11) **EP 3 348 611 A1**

## (12) EUROPEAN PATENT APPLICATION
published in accordance with Art. 153(4) EPC

(43) Date of publication:
**18.07.2018 Bulletin 2018/29**

(21) Application number: **16844022.0**

(22) Date of filing: **29.06.2016**

(51) Int Cl.:
*C08J 9/04* *(2006.01)*          *B32B 5/28* *(2006.01)*
*B32B 27/30* *(2006.01)*        *C08F 2/44* *(2006.01)*
*C08F 20/02* *(2006.01)*

(86) International application number:
**PCT/JP2016/069272**

(87) International publication number:
**WO 2017/043156 (16.03.2017 Gazette 2017/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **09.09.2015  JP 2015177633**

(71) Applicant: **Sekisui Plastics Co., Ltd.**
**Osaka-shi**
**Osaka 530-8565 (JP)**

(72) Inventors:
• **KITADE, Hiroaki**
  **Osaka-shi**
  **Osaka 5308565 (JP)**
• **TARUMOTO, Hiroyuki**
  **Osaka-shi**
  **Osaka 5308565 (JP)**

(74) Representative: **Hoffmann Eitle**
**Patent- und Rechtsanwälte PartmbB**
**Arabellastraße 30**
**81925 München (DE)**

(54) **FOAMED ACRYLIC-RESIN OBJECT, PROCESS FOR PRODUCING SAME, AND FIBER-REINFORCED COMPOSITE**

(57)     Provided is a foamed acrylic-resin object, in which a heat-resistant temperature in thermomechanical analysis is 170°C or higher, and the number of bubbles respectively having a major diameter of 2 mm or greater is 2.0 or less per area of 10 cm × 10 cm.

**EP 3 348 611 A1**

**Description**

Technical Field

The present invention relates to a foamed acrylic-resin object, a process for producing the same, and a fiber-reinforced composite.

Priority is claimed on Japanese Patent Application No. 2015-177633, filed on September 9, 2015, the content of which is incorporated herein by reference.

Background Art

A foamed acrylic-resin formed object is used for a daylighting heat-insulating material or a medical roentgen stand core material because of excellent strength, light transmitting properties, lightweight properties, and heat insulation properties of the object. Further, a foamed acrylic-resin formed object is also used as a member constituting a wall material of a cold insulation room for a freight vehicle or the hull of a small boat by attaching fiber-reinforced plastic (hereinafter, also referred to as "FRP") to the surface of the foamed acrylic-resin formed object.

As a process for producing such a foamed acrylic-resin object, a process for mixing a polymerizable monomer component containing an acrylic monomer, a foaming agent, and a polymerization initiator to prepare a polymerizable solution, pouring the polymerizable solution into a form, heating the form, polymerizing the polymerizable monomer component, and further heating the obtained foamable polymer at a high temperature to be foamed is employed.

A fiber-reinforced composite whose core material is formed of a foamed acrylic-resin object and surface material is formed of an FRP sheet is prepared by laminating an FRP sheet on the surface of the foamed acrylic-resin object, heating the laminate under pressure, and thus bonding the foamed acrylic-resin object and the FRP sheet to each other. Therefore, a foamed acrylic-resin object is required to have processing suitability so that thermal contraction does not occur even under a high temperature condition.

Various suggestions have been made in order to improve the processing suitability of a foamed acrylic-resin object.

PTL 1 suggests a foamed acrylic-resin object obtained by using a polymerizable monomer that contains 36% by mass or greater of methacrylic acid.

PTL 2 suggests a foamed acrylic-resin object obtained by using a polymerizable monomer that contains an acrylic monomer having maleic anhydride and methacrylamide.

However, such a foamed acrylic-resin object of the related art has problems of poor light transmitting properties and appearance, and thus the results are not satisfactory in a case of being used for applications particularly requiring uniform light transmitting properties, such as a medical roentgen stand core material. In addition, in a case where the foamed acrylic-resin object has bubbles (hereinafter, also referred to as "voids") that are significantly larger (for example, a bubble having a major diameter of 2 mm or greater) than the surrounding bubbles, voids may appear as shadows on a roentgenograph and the mechanical strength is also not satisfactory.

Citation List

Patent Literature

[PTL 1] Japanese Unexamined Patent Application, First Publication No. 2014-9285
[PTL 2] Japanese Unexamined Patent Application, First Publication No. 2013-227493

Summary of Invention

Technical Problem

The present invention has been made in consideration of the above-described circumstances, and an object thereof is to provide a foamed acrylic-resin object having excellent processing suitability, light transmitting properties, appearance, and mechanical strength.

Solution to Problem

As a result of intensive research, the present inventors found that the above-described problems can be solved by reducing occurrence of voids.

The present invention has the following aspects.

[1] A foamed acrylic-resin object, in which a heat-resistant temperature measured according to the following measuring process A is 170°C or higher, and the number of bubbles respectively having a major diameter of 2 mm or greater which is measured according to the following measuring process B is 2.0 or less per area of 10 cm × 10 cm.

<Measuring process A>

A foamed acrylic-resin object having a size of 7 mm (length) × 7 mm (width) × 2 mm (thickness) is used as a test piece. A thermomechanical analyzer is used and a quartz probe which has a tip with a diameter of 3 mm is used as an indenter. In a compression test mode, an indenter with a load of 100 mN is applied in the thickness direction of the test piece, and the test piece is heated at a temperature rising rate of 5°C/min from 30°C. The temperature at which 10% of the thickness of the test piece is reduced due to contraction compared to the thickness of the test piece before the test is started is measured.

<Measuring process B>

A foamed acrylic-resin object having a side with a size of 10 cm or greater is used as a test piece. Cross sections of the test piece in three directions orthogonal to one another are observed using a scanning electron microscope to acquire the total number of bubbles respectively having a major diameter of 2 mm or greater, and the average value per area of 10 cm × 10 cm is acquired.

[2] The foamed acrylic-resin object according to [1], in which the foamed acrylic-resin object is obtained by polymerizing and foaming a polymerizable solution which contains a polymerizable monomer component containing an acrylic monomer, a thermally decomposable foaming agent, a polymerization initiator, and a plasticizer, the content of (meth)acrylic acid contained in the polymerizable monomer component is in a range of 30% to 70% by mass with respect to the total mass of the polymerizable monomer component, and the plasticizer is at least one compound selected from the group consisting of sulfonic acid ester, adipic acid ester, and citric acid ester.

[3] The foamed acrylic-resin object according to [1] or [2], in which the average bubble diameter is in a range of 0.05 to 0.30 mm.

[4] The foamed acrylic-resin object according to [2], in which the content of the plasticizer contained in the polymerizable solution is in a range of 0.1 to 20 parts by mass with respect to 100 parts by mass of the polymerizable monomer component.

[5] The foamed acrylic-resin object according to [2], in which the polymerizable monomer component contains maleic anhydride and (meth)acrylamide.

[6] A fiber-reinforced composite comprising: the foamed acrylic-resin object according to any one of [1] to [5]; and fiber-reinforced plastic.

[7] A process for producing a foamed acrylic-resin object, comprising: polymerizing a polymerizable solution that contains a polymerizable monomer component containing an acrylic monomer, a thermally decomposable foaming agent, a polymerization initiator, and a plasticizer to obtain a foamable polymer; and foaming the foamable polymer, in which the content of (meth)acrylic acid contained in the polymerizable monomer component is in a range of 30% to 70% by mass with respect to the total mass of the polymerizable monomer component, and the plasticizer is at least one compound selected from the group consisting of sulfonic acid ester, adipic acid ester, and citric acid ester.

[8] The process for producing a foamed acrylic-resin object according to [7], in which the content of the plasticizer contained in the polymerizable solution is in a range of 0.1 to 20 parts by mass with respect to 100 parts by mass of the polymerizable monomer component.

[9] The process for producing a foamed acrylic-resin object according to [7], in which the polymerizable monomer component contains maleic anhydride and (meth)acrylamide.

[10] A sports product comprising: the foamed acrylic-resin object according to any one of [1] to [5].

[11] A vehicle member comprising: the foamed acrylic-resin object according to any one of [1] to [5].

Advantageous Effects of Invention

According to the present invention, it is possible to provide a foamed acrylic-resin object having excellent processing suitability, light transmitting properties, appearance, and mechanical strength.

Brief Description of Drawings

FIG. 1 is a cross-sectional view illustrating an example of a foamed acrylic-resin object of the present invention.
FIG. 2 is a cross-sectional view illustrating an example of a fiber-reinforced composite of the present invention.

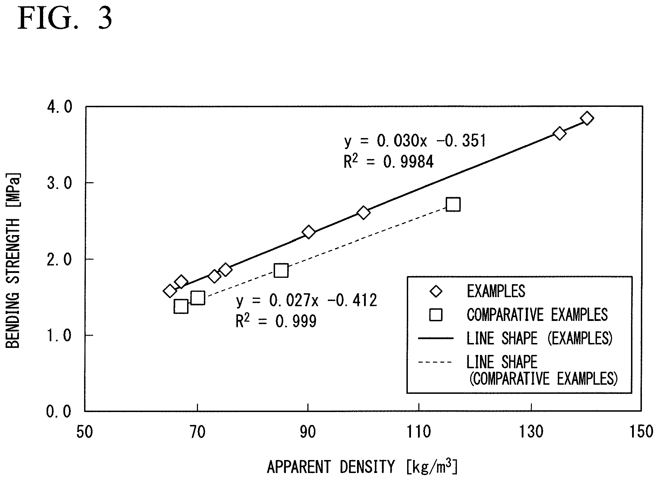

FIG. 3 is a graph showing a relationship between the apparent density and the bending strength of a foamed acrylic-resin object in an example.

Description of Embodiments

«Foamed acrylic-resin object»

Hereinafter, a foamed acrylic-resin object of the present invention will be described.

In thermomechanical analysis, the heat-resistant temperature of the foamed acrylic-resin object according to the present invention is 170°C or higher, preferably 180°C or higher, and more preferably 190°C or higher. More specifically, the heat-resistant temperature in thermomechanical analysis is preferably in a range of 170°C to 220°C, more preferably in a range of 180°C to 210°C, and still more preferably in a range of 190°C to 200°C.

Further, the heat-resistant temperature in thermomechanical analysis is measured as follows.

<Process for measuring heat-resistant temperature>

A foamed acrylic-resin object having a size of 7 mm (length) × 7 mm (width) × 2 mm (thickness) is used as a test piece. A thermomechanical analyzer is used and a quartz probe which has a tip with a diameter of 3 mm is used as an indenter. In a compression test mode, an indenter with a load of 100 mN is applied in the thickness direction of the test piece, and the test piece is heated at a temperature rising rate of 5°C/min from 30°C. The temperature at which 10% of the thickness of the test piece is reduced due to contraction compared to the thickness of the test piece before the test is started is measured.

In the foamed acrylic-resin object of the present invention, the number of bubbles respectively having a major diameter of 2 mm or greater which is measured using the following process is 2.0 or less, preferably 1.8 or less, more preferably 1.6 or less, still more preferably 1.4 or less, and particularly preferably 1.2 or less per area of 10 cm × 10 cm.

<Process for measuring number of bubbles respectively having major diameter of 2 mm or greater>

A foamed acrylic-resin object having a side with a size of 10 cm or greater is used as a test piece. A first cross section in an arbitrary thickness direction of the test piece, a second cross section in a thickness direction orthogonal to the first cross section, and a third cross section in a horizontal direction are observed using a scanning electron microscope to acquire the total number of bubbles respectively having a major diameter of 2 mm or greater, and the average value per area of 10 cm × 10 cm is acquired.

In addition, the first cross section and the second cross section are cross sections obtained by cutting the test piece in the thickness direction. At this time, the first cross section and the second cross section are orthogonal to each other. The third cross section is a cross section obtained by cutting the test piece in the horizontal direction. At this time, the third cross section is orthogonal to the first cross section and the second cross section.

Specifically, a foamed acrylic-resin object having a size of 10 cm × 10 cm × 10 cm is cut out from the foamed acrylic-resin object and used as a test piece. The test piece is cut such that a first cross section which has been cut in an arbitrary direction, a second cross section orthogonal to the first cross section, and a third cross section orthogonal to the first cross section and the second cross section are formed. These three cross sections are observed using a scanning electron microscope to acquire the total number of bubbles respectively having a major diameter of 2 mm or greater, and the average value per area of 10 cm × 10 cm is acquired.

The average bubble diameter of the foamed acrylic-resin object of the present invention is preferably in a range of 0.05 to 0.30 mm and more preferably in a range of 0.1 to 0.25 mm. In a case where the average bubble diameter is greater than or equal to the above-described lower limit, excellent appearance of the foamed acrylic-resin object is easily obtained. In a case where the average bubble diameter is less than or equal to the above-described upper limit, the mechanical strength of the foamed acrylic-resin object is easily improved.

In addition, the average bubble diameter is calculated as follows.

The foamed acrylic-resin object is cut, the cut cross section is magnified 18 times and imaged using a scanning electron microscope, and the captured image of the cut cross section is printed on paper. Next, arbitrary six line segments (length of 60 mm) are drawn on the paper, and the average chord length for each line segment is calculated from the number of bubbles overlapping the line segments according to the following equation. Here, the line segments are drawn so as not to be in contact with only the contact points of bubbles as much as possible. In a case where only the contact points of bubbles are in contact with the line segments, the number of such bubbles is included in the number of bubbles.

$$\text{Average chord length (t)} = \text{length of line segment}/(\text{number of bubbles} \times$$

$$\text{magnification of photograph})$$

Further, a bubble diameter D is calculated by the following equation.

$$D = t/0.616$$

In addition, the arithmetic average value of the bubble diameter D acquired for each line segment is acquired, and this arithmetic average value is set as the average bubble diameter of the foamed acrylic-resin object.

The apparent density of the foamed acrylic-resin object of the present invention is preferably in a range of 0.02 to 0.2 g/cm³ and more preferably in a range of 0.05 to 0.15 g/cm³. In a case where the apparent density is greater than or equal to the above-described lower limit, the mechanical strength is easily improved. In a case where the apparent density is less than or equal to the above-described upper limit, excellent appearance of the foamed acrylic-resin object is easily obtained.

Further, the apparent density is measured according to a process in conformity with the process described in JIS K 7222-1999. Specifically, the mass of the test piece with a volume of 10 cm³ or greater which has been cut such that the original cell structure is not changed is measured and the apparent density thereof is calculated by the following equation.

$$\text{Apparent density (g/cm}^3) = \text{mass of test piece (g)}/\text{volume of test piece (cm}^3)$$

It is preferable that a relationship of "Y ≥ 0.030X - 0.351" is satisfied when the bending strength (unit: MPa) of the foamed acrylic-resin object of the present invention is set as Y and the apparent density (unit: kg/m³) thereof is set as X.

The mechanical strength thereof is likely to be improved by satisfying the above-described relationship.

Further, the bending strength can be measured in conformity with the process described in "Foamed plastic heat reserving materials" of JIS A 9511:2006.

The foamed acrylic-resin object of the present invention is produced by polymerizing and foaming a polymerizable solution which contains a polymerizable monomer component containing an acrylic monomer, a thermally decomposable foaming agent, a polymerization initiator, and a plasticizer. Particularly, it is preferable that the foamed acrylic-resin object is produced according to the same process as the production process for «Process for producing foamed acrylic-resin object» described below.

«Process for producing foamed acrylic-resin object»

Hereinafter, the process for producing a foamed acrylic-resin object of the present invention will be described.

According to the process for producing a foamed acrylic-resin object of the present invention, a foamable polymer is prepared by polymerizing a polymerizable solution which contains a polymerizable monomer component containing an acrylic monomer, a thermally decomposable foaming agent, a polymerization initiator, and a plasticizer (polymerizing step).

Next, a foamed acrylic-resin object (hereinafter, also referred to as a "foamed object") is prepared by foaming the foamable polymer (foaming step).

<Polymerizing step>

The polymerizable solution is obtained by mixing a polymerizable monomer component containing an acrylic monomer, a thermally decomposable foaming agent, a polymerization initiator, and a plasticizer.

Hereinafter, constituent components of the polymerizable solution will be described.

[Polymerizable monomer]

The polymerizable monomer component of the present invention contains an acrylic monomer component.

(Acrylic monomer)

Examples of the acrylic monomer include maleic anhydride, (meth)acrylamide, (meth)acrylic acid, maleic acid, fumaric acid, itaconic acid, itaconic anhydride, crotonic acid, ethyl (meth)acrylate, methyl (meth)acrylate, butyl (meth)acrylate, lauryl (meth)acrylate, 2-ethylhexyl (meth)acrylate, cyclohexyl (meth)acrylate, benzyl (meth)acrylate, maleic acid amide, and maleic acid imide. Among these, (meth)acrylic acid, methyl (meth)acrylate, maleic anhydride, and (meth)acrylamide are preferable.
Further, the term "(meth)acryl" in the present specification means any of "methacryl" and "acryl".
The acrylic monomer may be used alone or in combination of two or more kinds thereof.
The content of the acrylic monomer in the polymerizable monomer component is preferably in a range of 20% to 90% by mass with respect to the total mass of the polymerizable monomer component. In a case where the content of the acrylic monomer is greater than or equal to the above-described lower limit, the processing suitability of the foamed acrylic-resin object is easily improved. In a case where the content of the acrylic monomer is less than or equal to the upper limit, the light transmitting properties are easily improved.
The content of the (meth)acrylic acid in the polymerizable monomer component is preferably in a range of 30% to 70% by mass and more preferably in a range of 36% to 60% by mass with respect to the total mass of the polymerizable monomer component. In a case where the content of the (meth)acrylic acid is greater than or equal to the above-described lower limit, the processing suitability of the foamed acrylic-resin object is easily improved. In a case where the content of the (meth)acrylic acid is less than or equal to the upper limit, the light transmitting properties are easily improved.
The content of the methyl (meth)acrylate in the polymerizable monomer component is preferably in a range of 10% to 45% by mass and more preferably in a range of 20% to 40% by mass with respect to the total mass of the polymerizable monomer component. In a case where the content of the methyl (meth)acrylate is greater than or equal to the above-described lower limit, the processing suitability of the foamed acrylic-resin object is easily improved. In a case where the content of the methyl (meth)acrylate is less than or equal to the upper limit, the light transmitting properties are easily improved.
The content of the maleic anhydride in the polymerizable monomer component is preferably in a range of 5% to 10% by mass with respect to the total mass of the polymerizable monomer component. In a case where the content of the maleic anhydride is greater than or equal to the above-described lower limit, the processing suitability of the foamed acrylic-resin object is easily improved. In a case where the content of the maleic anhydride is less than or equal to the upper limit, the light transmitting properties are easily improved.
The content of the (meth)acrylamide in the polymerizable monomer component is preferably in a range of 1% to 5% by mass with respect to the total mass of the polymerizable monomer component. In a case where the content of the (meth)acrylamide is greater than or equal to the above-described lower limit, the processing suitability of the foamed acrylic-resin object is easily improved. In a case where the content of the (meth)acrylamide is less than or equal to the upper limit, the light transmitting properties are easily improved.

(Styrene)

The polymerizable monomer component may further contain styrene.
The content of the styrene in the polymerizable monomer component is preferably in a range of 10% to 20% by mass with respect to the total mass of the polymerizable monomer component. In a case where the content of the styrene is greater than or equal to the above-described lower limit, the processing suitability of the foamed acrylic-resin object is easily improved. In a case where the content of the styrene is less than or equal to the upper limit, the light transmitting properties are easily improved.

(Polymerizable monomer other than acrylic monomer and styrene)

As a polymerizable monomer other than the above-described acrylic monomer and styrene, the polymerizable solution may contain a small amount of monomer which can be copolymerized with the acrylic monomer for the purpose of modifying the foamed acrylic-resin object.
The total content of the acrylic monomer, the styrene, and the polymerizable monomer other than the acrylic monomer and the styrene does not exceed 100% by mass with respect to the total mass of the polymerizable monomer component.

[Thermally decomposable foaming agent]

The thermally decomposable foaming agent is a compound that is decomposed at 65°C or higher and generates gas. Among examples of such a compound, a compound that is decomposed in a temperature range of 100°C to 180°C and generates gas is preferable.

Examples of the thermally decomposable foaming agent include urea, a urea derivative, dinitrosopentamethylenetetramine, amidoguanidine, trimethylene triamine, paratoluene sulfone hydrazine, azodicarbonamide, thiourea, ammonium chloride, dicyandiamide, dioxane, hexane, chloral hydrate, and citric acid. Among these, urea is preferable.

The thermally decomposable foaming agent may be used alone or in combination of two or more kinds thereof.

The content of the thermally decomposable foaming agent in the polymerizable solution is preferably in a range of 0.5 to 30 parts by mass with respect to 100 parts by mass of the polymerizable monomer component.

In a case where the content of the thermally decomposable foaming agent is in the above-described numerical range, the light transmitting properties are easily improved.

In a case where the thermally decomposable foaming agent is urea, the content of the thermally decomposable foaming agent is preferably in a range of 1 to 15 parts by mass with respect to 100 parts by mass of the polymerizable monomer component.

[Polymerization initiator]

As the polymerization initiator, a redox-based polymerization initiator, a thermally decomposable initiator, or a photodecomposable initiator can be used. Among these, a redox-based polymerization initiator is preferable.

Examples of the redox-based polymerization initiator include t-butyl hydroperoxide, cumene hydroxyperoxide, diisopropylbenzene hydroperoxide, p-menthane hydroperoxide, and 1,1,3,3-tetramethylbutylhydroperoxide. Among these, t-butyl hydroperoxide is preferable.

The polymerization initiator may be used alone or in combination of two or more kind thereof.

The content of the polymerization initiator in the polymerizable solution is preferably in a range of 0.05 to 5 parts by mass with respect to 100 parts by mass of the polymerizable monomer component.

[Plasticizer]

Examples of the plasticizer include adipic acid ester, trimellitic acid ester, polyester, phosphoric acid ester, citric acid ester, epoxidized vegetable oil, sebacic acid ester, azelaic acid ester, maleic acid ester, benzoic acid ester, and sulfonic acid ester. Among these, sulfonic acid ester, adipic acid ester, and citric acid ester are preferable.

Examples of the sulfonic acid ester include alkylsulfonic acid ester. In the alkylsulfonic acid ester, the number of carbon atoms in an alkyl group is preferably in a range of 12 to 20. The number of carbon atoms in an ester moiety is preferably in a range of 1 to 20. Among examples of the sulfonic acid ester, alkylsulfonic acid phenyl ester is preferable. Examples of commercially available products of the sulfonic acid ester include Mesamoll (manufactured by Lanxess AG).

In the adipic acid ester, the number of carbon atoms in an ester moiety is preferably in a range of 1 to 20 and more preferably in a range of 3 to 10. Specific examples thereof include methyl adipate, ethyl adipate, n-propyl adipate, isopropyl adipate, n-butyl adipate, isobutyl adipate, and t-butyl adipate. Among these, isobutyl adipate is preferable.

In the citric acid ester, the number of carbon atoms in an ester moiety is preferably in a range of 1 to 20 and more preferably in a range of 3 to 10. In the citric acid ester, it is preferable that hydrogen atoms of a hydroxyl group are substituted with substituents. Examples of the substituent include an acetyl group. Specific examples of the acetyl citric acid ester include methyl acetyl citrate, ethyl acetyl citrate, n-propyl acetyl citrate, isopropyl acetyl citrate, n-butyl acetyl citrate, isobutyl acetyl citrate, and t-butyl acetyl citrate. Among these, n-butyl acetyl citrate is preferable.

(Metal ion and chloride ion)

In the present embodiment, the polymerizable solution may further contain one or more metal ions selected from the group consisting of $Cu^+$, $Cu^{2+}$, $Fe^{3+}$, $Ag^+$, $Pt^{2+}$, and $Au^{3+}$; and chloride ions.

The oxidation-reduction potential of all the metal ions has a positive value. In the polymerizable solution, the metal ions receive the electron, in other words, exhibit the functions of an oxidant, or donate the electron, in other words, exhibit the functions of a reducing agent, and contribute to promotion of a polymerization reaction of the polymerizable monomer.

Meanwhile, the chloride ions contribute to promotion of a polymerization reaction of the polymerizable monomer by being bonded to or desorbed from the metal ions.

The metal ions and chloride ions may be contained in the polymerizable solution at once using a material having both ions such as copper chloride, ferric chloride, silver chloride, or gold chloride or may be contained in the polymerizable solution separately using different materials.

The above-described metal ions can be contained in the polymerizable solution by adding materials such as copper bromide, copper iodide, copper stearate, copper naphthenate, or silver bromide as materials other than the chlorides described above.

Further, the ions of copper, silver, and gold can be contained in the polymerizable solution by adding metals or alloys without adding the above-described salts.

For example, by mixing fine particles, wires, meshes formed of copper, copper alloys (constantan: copper/nickel alloy, brass: copper/zinc alloy), silver, and gold into the polymerizable solution, these ions can be obtained in the polymerizable solution.

Specific examples of the materials used for allowing the polymerizable solution to contain chloride ions include, in addition to sodium chloride and hydrochloric acid, imidazolium salt type surfactants such as 1,3-dimethylimidazolium chloride, 1-butyl-3-methylimidazolium chloride, 1-butyl-2,3-dimethylimidazolium chloride, 1-ethyl-3-methylimidazolium chloride, 1-methyl-3-n-octylimidazolium chloride, and 1-methyl-1-hydroxyethyl-2-tallow alkyl-imidazolium chloride; and quaternary ammonium salt type surfactants such as hexatrimethylammonium chloride, dodecyltrimethylammonium chloride, stearyltrimethylammonium chloride, palm alkyltrimethylammonium chloride, tallow alkyltrimethylammonium chloride, behenyltrimethylammonium chloride, polydiallyldimethylammonium chloride, dialkyldimethylammonium chloride, cetyltrimethylammonium chloride, and lauryltrimethylammonium chloride.

Further, as the specific materials used for allowing the polymerizable solution to contain chloride ions, any of sodium chloride, hydrochloric acid, hexatrimethylammonium chloride, dialkyldimethylammonium chloride, cetyltrimethylammonium chloride, and lauryltrimethylammonium chloride are preferable; and cetyltrimethylammonium chloride is particularly preferable.

In a case where the polymerizable solution contains such chloride ion-containing materials, the chloride ion-containing materials can be contained in the polymerizable solution such that the proportion thereof is set to be in a range of 0.005 to 5 parts by mass when the total amount of the polymerizable monomer in the polymerizable solution is set to 100 parts by mass.

In addition, specific preferred examples of the materials used for allowing the polymerizable solution to contain the above-described metal ions include silver chloride, copper chloride, copper stearate, copper naphthenate, ferric chloride, and copper (copper particles and copper wires).

In a case where the polymerizable solution contains such materials, the materials can be contained in the polymerizable solution such that the proportion thereof is set to be in a range of $1\times10^{-10}$ to $1\times10^{-2}$ parts by mass when the total amount of the polymerizable monomer in the polymerizable solution is set to 100 parts by mass.

(Dehydrating agent)

In the present embodiment, the polymerizable solution may further contain a dehydrating agent.

A sulfate such as anhydrous sodium sulfate or anhydrous magnesium sulfate; or zeolites such as molecular sieves can be preferably used as the dehydrating agent. It is preferable that the polymerizable solution contains the dehydrating agent such that the proportion thereof is set to be in a range of 0.01 to 50 parts by mass in a case where the total amount of the polymerizable monomer in the polymerizable solution is set to 100 parts by mass. It is desired that the dehydrating agent is mixed into the polymerizable solution and the solution is stirred to dehydrate moisture in the solution during preparation, and the dehydrating agent is filtered and then removed therefrom.

[Other arbitrary components]

The polymerizable solution may contain a solvent, a chain transfer agent, a reducing agent, a dehydrating agent, a polymerization inhibitor, a foam regulator, and other foamed acrylic-resin objects.

In a case where the polymerizable solution is heated to polymerize the polymerizable monomer, it is preferable that the polymerization is performed in a nitrogen atmosphere. The polymerization temperature is preferably in a range of 35°C to 70°C and more preferably in a range of 40°C to 60°C.

The polymerization may be performed at a constant polymerization temperature or may be performed by changing the polymerization temperature within the range of 35°C to 70°C.

The polymerization time is preferably in a range of 10 to 45 hours, more preferably in a range of 10 to 35 hours, and still more preferably in a range of 15 to 25 hours. In a case where the polymerization time is longer than or equal to the above-described preferable lower limit, the polymerization reaction is likely to be sufficiently promoted and voids and the like are unlikely to occur. In a case where the polymerization time is shorter than or equal to the above-described preferable upper limit, the productivity increases.

In a case where the polymerizable solution is heated in a form for performing polymerization, the form may be appropriately selected according to the desired shape of the foamable polymer.

It is preferable that the polymerizable solution is filtered using a filtration member having a mesh with a mesh size of less than 0.300 mm before the solution is poured into the form. In this manner, foreign matter in the polymerizable solution is removed and occurrence of voids and the like caused by the foreign matter can be suppressed.

Examples of the filtration member having a mesh with a mesh size of less than 0.300 mm include a 60 mesh strainer (mesh size of 0.300 mm) and a 200 mesh strainer (mesh size of 0.077 mm).

<Foaming step>

In the foaming step, the foamable polymer obtained in the polymerizing step is foamed to obtain a foamed acrylic-resin object.

Such a foaming step is carried out by foaming the foamable polymer between a pair of upper and lower thermal plates of a mold which are separated from each other at an arbitrary distance, bringing the foamed object into contact with the upper thermal plate, and pressing the foamed object using the upper thermal plate. Next, the foaming step may include a pressing force releasing operation for releasing the force of the upper thermal plate to press the foamed object.

According to the production process of the present invention, during the production of a foamed acrylic-resin object having a flat plate shape, a foamable polymer having a flat plate shape is provided between a pair of upper and lower thermal plates of a mold which are separated from each other at an arbitrary distance, and the foamable polymer is heated by the thermal plates at a thermal decomposition temperature or higher of the thermally decomposable foaming agent.

The foamable polymer may be heated in the presence of a lubricant on the surface of thereof while the foamable polymer is heated by the thermal plates. By heating the foamable polymer in the presence of a lubricant on the surface thereof, it is possible to satisfactorily prevent occurrence of cracks in the surface of the foamed acrylic-resin object.

The process for applying a lubricant is not particularly limited, and examples thereof include a process for manually applying a lubricant using a brush or cloth.

Examples of the lubricant include dimethyl silicone and methyl phenyl silicone. The lubricant may be used alone or in combination of two or more kinds thereof. The coating amount of the lubricant is appropriately determined by considering the foaming ratio of the foamable polymer, the type of lubricant, and the like.

The mold used for performing heating and foaming is not particularly limited as long as the mold includes a pair of upper and lower thermal plates, and may be appropriately selected according to the shape of the target foamed object. A foamed object having a desired shape can be obtained by performing heating and foaming the foamable polymer in a mold having a desired inner size.

The heating temperature for heating and foaming the foamable polymer is set to be higher than or equal to the temperature at which the foamable polymer softens and to be higher than or equal to the thermal decomposition temperature of the thermally decomposable foaming agent to be contained in the foamable polymer.

In a case where the thermally decomposable foaming agent is urea (thermal decomposition temperature of 135°C), the heating temperature is preferably 135°C or higher and more preferably 145°C or higher. As the heating temperature is higher, the foaming efficiently proceeds. Further, the heating temperature is preferably 220°C or lower and more preferably 200°C or lower. In a case where the heating temperature is lower than or equal to the above-described upper limit, the foamed object is unlikely to be thermally degraded. Specifically, the heating temperature is preferably in a range of 135°C to 220°C and more preferably in a range of 145°C to 200°C.

The foamable polymer is foamed by being heated at the thermal decomposition temperature or higher of the thermally decomposable foaming agent. The foamable polymer continuously expands on the lower thermal plate while being foamed, and a foamed object to be generated is brought into contact with the upper thermal plate. In addition, the foamed object is gradually pressed by each of the upper and lower thermal plates.

Next, for example, it is preferable to perform an operation of releasing the force (pressing force releasing operation) of the thermal plates to press the foamed object by widening the distance between the pair of thermal plates. By performing the pressing force releasing operation, a variation in density of the foamed object to be obtained is decreased.

Next, the foamed object is interposed between the pair of thermal plates, heated at the thermal decomposition temperature or higher of the thermally decomposable foamed agent in a state in which the foamed object is pressed by the thermal plates, and then further foamed.

After the pressing force releasing operation is performed, the force of thermal plates to press the foamed object is appropriately determined by considering the foaming ratio and the like of the foamed object.

The foaming ratio in the entire foaming step is appropriately determined according to the applications of the foamed acrylic-resin object and the like.

Such a foamed acrylic-resin object is suitably used as a member for constituting, for example, an aircraft body, a wall material of a cold insulation room for a freight vehicle, the hull of a small boat, a blade of a wind power generator, a daylighting heat-insulating material, a roentgenography machine stand for transmitting X-rays, a sports product (a core material of a ski, a surfboard, or a racket grip), and a vehicle member (such as a bucket sheet, a back surface table, or an in-arm table).

«Fiber-reinforced composite»

Hereinafter, the fiber-reinforced composite of the present invention will be described.

The fiber-reinforced composite of the present invention contains the foamed acrylic-resin object of the present invention; and fiber-reinforced plastic.

As the fiber-reinforced plastic (FRP), FRP obtained by burying a reinforced fiber bundle in plastic serving as a base material so as to be integrated is exemplified. Examples of the reinforced fiber bundle include a carbon fiber bundle, a glass fiber bundle, a boron fiber bundle, and an aramid fiber bundle. Examples of the plastic include an epoxy resin, a vinyl ester resin, an unsaturated polyester resin, an acrylic resin, a polyamide resin, a polycarbonate resin, a polypropylene resin, and a urethane resin.

The fiber-reinforced composite of the present invention can be formed by laminating fiber-reinforced plastic on the foamed acrylic-resin object of the present invention.

It is preferable that the foamed acrylic-resin object and the FRP sheet are bonded to each other by heating the obtained laminate under pressure after the above-described lamination.

The pressure during the bonding is preferably in a range of 0.1 to 1.0 MPa and more preferably in a range of 0.2 to 0.8 MPa. Further, the pressure thereof can be measured using a press-attached pressure gauge or an autoclave-attached pressure gauge, but the process for measuring the pressure is not particularly limited.

The temperature during the bonding is preferably in a range of 60°C to 180°C and more preferably in a range of 90°C to 160°C.

In the fiber-reinforced composite of the present invention, the thickness of the foamed acrylic-resin object is preferably in a range of 1 to 60 mm and more preferably in a range of 3 to 40 mm.

In the fiber-reinforced composite of the present invention, the thickness of the fiber-reinforced plastic is preferably in a range of 0.2 to 4 mm and more preferably in a range of 0.2 to 2 mm.

The ratio of the thickness of the foamed acrylic-resin object to the thickness of the fiber-reinforced plastic is expressed as "(thickness of foamed acrylic-resin object)/(thickness of fiber-reinforced plastic)" and is preferably in a range of 0.25 to 400 and more preferably in a range of 0.5 to 200.

Further, the thickness can be measured according to a process for observing an image using an electron microscope or the like.

The fiber-reinforced composite of the present invention may include fiber-reinforced plastic on one surface of the foamed acrylic-resin object or include fiber-reinforced plastic on both surfaces of the foamed acrylic-resin object.

The fiber-reinforced composite of the present invention is used for an aircraft body, a wall material of a cold insulation room for a freight vehicle, the hull of a small boat, a blade of a wind power generator, and the like.

As described above, the foamed acrylic-resin object of the present invention has a configuration such that the heat-resistant temperature in thermomechanical analysis is 170°C or higher and the number of bubbles respectively having a major diameter of 2 mm or greater is 2.0 or less per area of 10 cm $\times$ 10 cm, and thus the foamed acrylic-resin object has excellent processing suitability, light transmitting properties, appearance, and mechanical strength.

Further, according to the process for producing the foamed acrylic-resin object of the present invention, the content of (meth)acrylic acid contained in the polymerizable monomer component is in a range of 30% to 70% by mass with respect to the total mass of the polymerizable monomer component, and the plasticizer is at least one compound selected from the group consisting of sulfonic acid ester, adipic acid ester, and citric acid ester. Therefore, a foamed acrylic-resin object having excellent processing suitability, light transmitting properties, appearance, and mechanical strength can be produced.

Further, since the fiber-reinforced composite of the present invention contains the foamed acrylic-resin object of the present invention, the fiber-reinforced composite has excellent light transmitting properties, appearance, and mechanical strength.

In the foamed acrylic-resin object of the present invention, it is preferable that the polymerizable monomer component contains an acrylic monomer; the thermally decomposable foaming agent is at least one selected from the group consisting of urea, a urea derivative, dinitrosopentamethylenetetramine, amidoguanidine, trimethylene triamine, paratoluene sulfone hydrazine, azodicarbonamide, thiourea, ammonium chloride, dicyandiamide, dioxane, hexane, chloral hydrate, and citric acid; the polymerization initiator is at least one selected from the group consisting of t-butyl hydroperoxide, cumene hydroxyperoxide, diisopropylbenzene hydroperoxide, p-menthane hydroperoxide, and 1,1,3,3-tetramethylbutylhydroperoxide; and the plasticizer is prepared by polymerizing and foaming at least one polymerizable solution selected from the group consisting of adipic acid ester, trimellitic acid ester, polyester, phosphoric acid ester, citric acid ester, epoxidized vegetable oil, sebacic acid ester, azelaic acid ester, maleic acid ester, benzoic acid ester, and sulfonic acid ester.

In the foamed acrylic-resin object of the present invention, it is preferable that the polymerizable monomer component is a mixture of methyl methacrylate, methacrylic acid, styrene, maleic anhydride, and methacrylamide; the thermally decomposable foaming agent is urea; the polymerization initiator is t-butyl hydroperoxide; and the plasticizer is prepared by polymerizing and foaming at least one polymerizable solution selected from the group consisting of alkylsulfonic acid phenyl ester, isobutyl adipate, and tri-n-butyl acetyl citrate.

Examples

Hereinafter, the present invention will be described in more detail with reference to examples and comparative examples, but the present invention is not limited to the following examples.

[Example 1]

0.5 parts by mass of t-butyl hydroperoxide ("PERBUTYL H-69", manufactured by NOF CORPORATION) serving as a polymerization initiator; $2.7 \times 10^{-3}$ parts by mass of copper stearate (manufactured by Mitsuwa Chemical Co., Ltd.) serving as a material for adding a metal ion ($Cu^{2+}$); 0.1 parts by mass of cetyltrimethylammonium chloride ("NISSAN CATION PB-40R", manufactured by NOF CORPORATION) serving as a material for adding a chloride ion; 0.2 parts by mass of calcium formate serving as a polymerization inhibitor; 2.0 parts by mass of sodium sulfate serving as a dehydrating agent; 5.0 parts by mass of urea serving as a foaming agent; and 2.0 parts by mass of MESAMOLL serving as a plasticizer were mixed with 100 parts by mass of a polymerizable monomer formed of 15% by mass of methyl methacrylate, 57% by mass of methacrylic acid, 16% by mass of styrene, 8% by mass of maleic anhydride, and 4% by mass of methacrylamide, and the mixture was heated at 35°C, stirred, and filtered to remove residual inorganic salts, thereby preparing a polymerizable solution.
1500 g of the obtained polymerizable solution was poured into a form made of TEFLON (registered trademark) in a rectangular parallelepiped shape with an inner size of 25 mm × 200 mm × 360 mm.
Further, the form containing the polymerizable solution was heated at 50°C for 10 hours and then further heated at 80°C for 3 hours, thereby obtaining a foamable polymer.
Thereafter, the foamable polymer was put into a hot air circulating furnace and heated (specifically, heated at an internal temperature of the furnace of 180°C for 2 hours) at a temperature of decomposing urea (thermal decomposition temperature of 135°C) or higher so that the foaming agent (urea) was decomposed, and the foamable polymer was foamed, thereby preparing a foamed acrylic-resin object having a size of 25 mm × 200 mm × 360 mm.

[Example 2]

A foamed acrylic-resin object was prepared in the same manner as in Example 1 except that the amounts of methyl methacrylate and methacrylic acid were respectively changed into 31% by mass and 41% by mass and isobutyl adipate was used as a plasticizer.

[Example 3]

A foamed acrylic-resin object was prepared in the same manner as in Example 1 except that the amounts of methyl methacrylate and methacrylic acid were respectively changed into 36% by mass and 36% by mass and tri-n-butyl acetyl citrate was used as a plasticizer.

[Example 4]

A foamed acrylic-resin object was prepared in the same manner as in Example 1 except that the amounts of methyl methacrylate, methacrylic acid, and plasticizer were respectively changed into 36% by mass, 36% by mass, and 1.0 part by mass.

[Example 5]

A foamed acrylic-resin object was prepared in the same manner as in Example 1 except that the amounts of methyl methacrylate and methacrylic acid were respectively changed into 41% by mass and 31% by mass.

[Example 6]

A foamed acrylic-resin object was prepared in the same manner as in Example 1 except that the amounts of methyl methacrylate, methacrylic acid, and plasticizer were respectively changed into 4% by mass, 68% by mass, and 1.0 part by mass.

[Example 7]

A foamed acrylic-resin object was prepared in the same manner as in Example 1 except that the amounts of methyl methacrylate, methacrylic acid, and plasticizer were respectively changed into 36% by mass, 36% by mass, and 0.1 parts by mass.

[Example 8]

A foamed acrylic-resin object was prepared in the same manner as in Example 1 except that the amounts of methyl methacrylate, methacrylic acid, and plasticizer were respectively changed into 36% by mass, 36% by mass, and 20 parts by mass.

[Comparative Example 1]

A foamed acrylic-resin object was prepared in the same manner as in Example 1 except that the amounts of methyl methacrylate and methacrylic acid were respectively changed into 47% by mass and 25% by mass.

[Comparative Example 2]

A foamed acrylic-resin object was prepared in the same manner as in Example 1 except that the amounts of methyl methacrylate and methacrylic acid were respectively changed into 47% by mass and 25% by mass and dioctyl phthalate was used as a plasticizer.

[Comparative Example 3]

A foamed acrylic-resin object was prepared in the same manner as in Example 1 except that the amounts of methyl methacrylate and methacrylic acid were respectively changed into 36% by mass and 36% by mass and dioctyl phthalate was used as a plasticizer.

[Comparative Example 4]

A foamed acrylic-resin object was prepared in the same manner as in Example 1 except that the amounts of methyl methacrylate and methacrylic acid were respectively changed into 36% by mass and 36% by mass and a plasticizer was not used.
With respect to each of the foamed acrylic-resin objects in the examples, evaluation of processing suitability, measurement of the average bubble diameter, measurement of the apparent density, measurement of the number of voids, evaluation of light transmitting properties, evaluation of mechanical strength, and evaluation of appearance were performed as follows.
The obtained results are listed in Table 1.

<Evaluation of processing suitability>

The heat-resistant temperature of each foamed acrylic-resin object in the examples was measured by the following procedures.
A test piece was prepared by cutting out a foamed object in a rectangular parallelepiped shape with a size of 7 mm (length) × 7 mm (width) × 2 mm (thickness). A device for measuring heat, stress, and strain ("EXSTRAR TMA/SS6100" (trade name), manufactured by SII NanoTechnology Inc.) was used and a quartz probe which has a tip with a diameter of 3 mm was used as an indenter. In a compression test mode, an indenter with a load of 100 mN was applied in the thickness direction of the test piece, and the test piece was heated at a temperature rising rate of 5°C/min from 30°C. The temperature at which 10% of the average thickness of the test piece was reduced due to contraction compared to the average thickness of the test piece before the test was started was measured, and this temperature was set as the heat-resistant temperature.
Further, correction was performed according to quartz coefficient setting before the analysis. Moreover, the average thickness of the test piece was measured by bringing an indenter with a load of 100 mN into contact with two sites of the test piece before the measurement. Therefore, the average value of the measurement results was acquired.

The processing suitability was evaluated from the heat-resistant temperature based on the following criteria.

[Evaluation criteria]

A: The heat-resistant temperature was high and the processing suitability was sufficiently obtained.
C: The heat-resistant temperature was low and the processing suitability was not sufficiently obtained.

<Measurement of average bubble diameter>

Each foamed acrylic-resin object of the examples was cut, a total of four cut cross sections were magnified 18 times and imaged using a scanning electron microscope ("S-3000N", manufactured by Hitachi, Ltd.), and the captured images of the cut cross sections were respectively printed on A4 paper.
Next, arbitrary six line segments (length of 60 mm) were drawn on each A4 paper, and the average chord length for each line segment was calculated by the following equation from the number of bubbles overlapping the line segments. Here, the line segments were drawn so as not to be in contact with only the contact points of bubbles as much as possible. In a case where only the contact points of bubbles were in contact with the line segments, the number of such bubbles was included in the number of bubbles.

$$\text{Average chord length (t)} = \text{length of line segment}/(\text{number of bubbles} \times \text{magnification of photograph})$$

Further, a bubble diameter D was calculated by the following equation.

$$D = t/0.616$$

In addition, the arithmetic average value of the bubble diameter D acquired for each line segment was acquired, and this arithmetic average value was set as the average bubble diameter of the foamed acrylic-resin object.

<Measurement of apparent density>

The apparent density of each foamed acrylic-resin object in the examples was measured according to a process in conformity with the process described in JIS K 7222-1999. Specifically, the mass of the test piece with a volume of 10 cm$^3$ or greater which was cut such that the original cell structure was not changed was measured and the apparent density thereof was calculated by the following equation.

$$\text{Apparent density (g/cm}^3) = \text{mass of test piece (g)}/\text{volume of test piece (cm}^3)$$

<Measurement of number of voids>

A foamed acrylic-resin object having a size of 10 cm $\times$ 10 cm $\times$ 10 cm was cut out from each foamed acrylic-resin object in the examples and used as a test piece. The test piece was cut such that a first cross section in an arbitrary direction, a second cross section orthogonal to the first cross section, and a third cross section orthogonal to the first cross section and the second cross section were formed. These three cross sections were observed using a scanning electron microscope to acquire the total number of bubbles respectively having a major diameter of 2 mm or greater, and the average value per area of 10 cm $\times$ 10 cm was acquired.

<Evaluation of light transmitting properties>

Each foamed acrylic-resin object in the examples was sliced in the thickness direction to obtain a section with a thickness of 10 mm, and this section was used as an evaluation target. Five evaluation targets were obtained from one sheet of foamed acrylic-resin object.
The obtained evaluation targets were exposed to a light source, light-hardly-transmitting regions and light-easily-transmitting regions were visually specified, and sections (dark sections) in a region including the light-hardly-transmitting regions and sections (bright sections) including the light-easily-transmitting regions were cut out and used as test pieces. Dark sections and bright sections were collected from respectively three sites of one sheet of evaluation target.

The total light transmittance of each obtained test piece was measured in conformity with "Process for testing total light transmittance of plastic-transparent material" of JIS K7361-1:1997 under the following measurement conditions. A difference (difference in light transmittance) between the average value of total light transmittances of the obtained dark sections and the average value of the total light transmittances of the obtained bright sections was acquired, the number of evaluation targets in which the difference in light transmittance was less than 1.2 was counted, and evaluation was performed based on the following evaluation criteria. Further, since light-easily-transmitting regions and light-hardly-transmitting regions were not able to be visually specified in the case of Example 1, this case was evaluated as "A" without measuring the total light transmittance.

[Measurement conditions]

Device: Haze and transmittance meter (Heze-meter HM-150, manufactured by MURAKAMI COLOR RESEARCH LABORATORY CO., Ltd.)
Measuring process: Double beam process (light source D65)
Test piece: length of 50 mm $\times$ width of 50 mm $\times$ thickness of 10 mm
Conditions for adjusting test piece: The test piece was adjusted by being allowed to stand in an environment of a temperature of 23 $\pm$ 2°C at a relative humidity (RH) of 50$\pm$5% for 20 hours.
Environment for measurement: temperature of 20 $\pm$ 2°C at relative humidity (RH) of 65$\pm$5%

[Evaluation criteria]

A: A variation in light transmittance was not found and the quality was excellent (the number of evaluation targets with a difference in light transmittance of less than 1.2 was 4 or 5).
B: A variation in light transmittance was found, but the foamed object was able to be used according to the applications (the number of evaluation targets with a difference in light transmittance of less than 1.2 was 2 or 3).
C: A variation in light transmittance was significant (the number of evaluation targets with a difference in light transmittance of less than 1.2 was 0 or 1).

<Evaluation of mechanical strength>

The bending strength of each foamed acrylic-resin object was measured in conformity with the process described in "Foamed plastic heat reserving materials" of JIS A 9511:2006.

Specifically, the size of the foamed acrylic-resin object (test piece) was set to 75 mm $\times$ 300 mm $\times$ 10 mm and the compression rate thereof was set to 10 mm/min, the measurement was performed under conditions of using a pressurizing wedge 10R and a support base 10R as tip tools at an inter-fulcrum distance of 200 mm, and the bending strength was calculated by the following equation, using a Tesilon universal testing machine UCT-10T (manufactured by ORIENTEC Co., Ltd.). The number of test pieces was set to 3 and the average value thereof was acquired.

$$\text{Bending strength (MPa)} = 3FL/2uh^2$$

In the equation, F represents the maximum bending load (N), L represents the inter-fulcrum distance (mm), u represents the width (mm) of the test piece, and h represents the thickness (mm) of the test piece.

The bending strength was acquired in the above-described manner, and the mechanical strength of the foamed acrylic-resin object was evaluated.

<Evaluation of appearance of foamed acrylic-resin object>

Each foamed acrylic-resin object was visually observed, and the appearance of the foamed acrylic-resin object was evaluated based on the following evaluation criteria.

[Evaluation criteria]

AA: The number of voids per area of 10 cm × 10 cm was 1.4 or less.
A: The number of voids per area of 10 cm × 10 cm was greater than 1.4 and 2.0 or less.
C: The number of voids per area of 10 cm × 10 cm was greater than 2.0.

[Table 1]

| | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|
| Polymerizable monomer component (% by mass) | Methyl methacrylate | 15 | 31 | 36 | 36 | 41 | 4 | 36 | 36 | 47 | 47 | 36 | 36 |
| | Methacrylic acid | 57 | 41 | 36 | 36 | 31 | 68 | 36 | 36 | 25 | 25 | 36 | 36 |
| | Styrene | 16 | 16 | 16 | 16 | 16 | 16 | 16 | 16 | 16 | 16 | 16 | 16 |
| | Maleic anhydride | 8 | 8 | 8 | 8 | 8 | 8 | 8 | 8 | 8 | 8 | 8 | 8 |
| | Methacrylamide | 4 | 4 | 4 | 4 | 4 | 4 | 4 | 4 | 4 | 4 | 4 | 4 |
| Plasticizer (parts by mass) | | 2 | 2 | 2 | 1 | 2 | 1 | 0.1 | 20 | 2 | 2 | 2 | 0 |
| Polymerization initiator (parts by mass) | | 0.5 | 0.5 | 0.5 | 0.5 | 0.5 | 0.5 | 0.5 | 0.5 | 0.5 | 0.5 | 0.5 | 0.5 |
| Thermally decomposable foaming agent (parts by mass) | | 5 | 5 | 5 | 5 | 5 | 5 | 5 | 5 | 5 | 5 | 5 | 5 |
| Physical properties | Heat-resistant temperature (°C) | 190 | 175 | 176 | 177 | 172 | 221 | 178 | 172 | 167 | 167 | 176 | 176 |
| | Average bubble diameter (mm) | 0.10 | 0.25 | 0.19 | 0.23 | 0.27 | 0.05 | 0.21 | 0.29 | 0.57 | 0.56 | 0.40 | 0.25 |
| | Apparent density (g/cm$^3$) | 0.140 | 0.065 | 0.100 | 0.073 | 0.067 | 0.135 | 0.090 | 0.075 | 0.085 | 0.070 | 0.116 | 0.067 |
| Evaluation results | Processing suitability | A | A | A | A | A | A | A | A | C | C | A | A |
| | Light transmitting properties | (5 sheets) A | (5 sheets) A | (5 sheets) A | (5 sheets) A | (4 sheets) A | (5 sheets) A | (5 sheets) A | (5 sheets) A | (2 sheets) B | (1 sheet) C | (3 sheets) B | (2 sheets) B |
| | Bending strength (MPa) | 3.84 | 1.58 | 2.60 | 1.77 | 1.70 | 3.64 | 2.35 | 1.86 | 1.85 | 1.49 | 2.71 | 1.38 |
| | Number (piece) of voids and appearance | (0.0) AA | (0.9) AA | (0.3) AA | (0.7) AA | (1.4) AA | (0.1) AA | (0.2) AA | (1.0) AA | (3.5) C | (2.4) C | (2.8) C | (4.0) C |

EP 3 348 611 A1

16

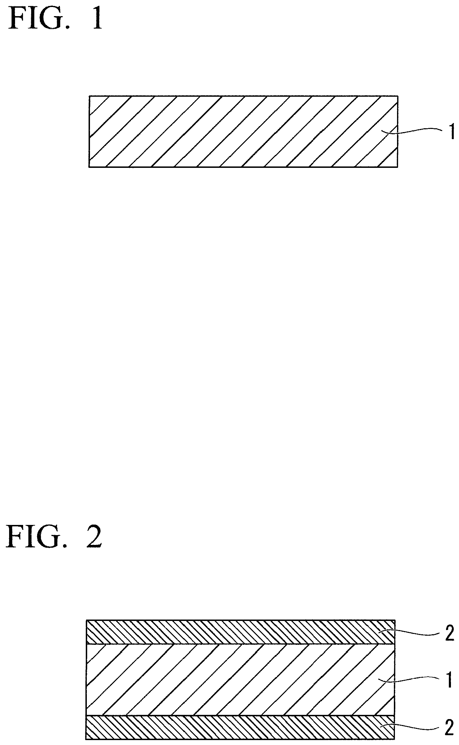

As seen in the results listed in Table 1, it was confirmed that the heat-resistant temperature in thermomechanical analysis is 170°C or higher, the number of voids is 2.0 or less per area of 10 cm × 10 cm, and the light transmitting properties and the appearance were excellent in the case of foamed acrylic-resin objects of Examples 1 to 8 to which the present invention was applied. Further, the foamed acrylic-resin objects of Examples 1 to 8 had higher bending strength than the bending strength of the foamed acrylic-resin objects of Comparative Examples 1 to 4. As illustrated in FIG. 1, the foamed acrylic-resin objects of Examples 1 to 8 satisfy the relationship of "Y ≥ 0.030X - 0.351", and thus the strength was particularly high.

In the case of the foamed acrylic-resin objects of Comparative Examples 1 to 4, it was confirmed that the number of voids was greater than 2.0 per area of 10 cm × 10 cm and the processing suitability, the light transmitting properties, the mechanical strength, and the appearance were inferior to those of the examples. The foamed acrylic-resin objects of Comparative Examples 1 to 4 satisfy the relationship of "Y = 0.027X - 0.412", and thus the strength was lower than the strength of those of Examples 1 to 8.

[Example 9]

The foamed acrylic-resin object obtained in Example 1 was cut out to have a size of 500 mm × 500 mm x 20 mm, fiber-reinforced plastic ("PYROFIL PREPREG TR3523-395GMP" (trade name), manufactured by MITSUBISHI RAYON CO., LTD., mesh size: 200 g/m$^2$, thickness: 0.23 mm) having a size of 500 mm × 500 mm × 0.23 mm was laminated on two surface layers of the foamed acrylic-resin object, and these were bonded to each other under a temperature condition of 135°C at a pressure of 1.5 MPa, thereby obtaining a fiber-reinforced composite.

[Example 10]

A fiber-reinforced composite was obtained in the same manner as in Example 9 except that the foamed acrylic-resin object obtained in Example 2 was used.

[Example 11]

A fiber-reinforced composite was obtained in the same manner as in Example 9 except that the foamed acrylic-resin object obtained in Example 3 was used.

[Example 12]

A fiber-reinforced composite was obtained in the same manner as in Example 9 except that the foamed acrylic-resin object obtained in Example 4 was used.

[Example 13]

A fiber-reinforced composite was obtained in the same manner as in Example 9 except that the foamed acrylic-resin object obtained in Example 5 was used.

[Example 14]

A fiber-reinforced composite was obtained in the same manner as in Example 9 except that the foamed acrylic-resin object obtained in Example 6 was used.

[Example 15]

A fiber-reinforced composite was obtained in the same manner as in Example 9 except that the foamed acrylic-resin object obtained in Example 7 was used.

[Example 16]

A fiber-reinforced composite was obtained in the same manner as in Example 9 except that the foamed acrylic-resin object obtained in Example 8 was used.

[Comparative Example 5]

A fiber-reinforced composite was obtained in the same manner as in Example 9 except that the foamed acrylic-resin object obtained in Comparative Example 1 was used.

[Comparative Example 6]

A fiber-reinforced composite was obtained in the same manner as in Example 9 except that the foamed acrylic-resin object obtained in Comparative Example 2 was used.

[Comparative Example 7]

A fiber-reinforced composite was obtained in the same manner as in Example 9 except that the foamed acrylic-resin object obtained in Comparative Example 3 was used.

[Comparative Example 8]

A fiber-reinforced composite was obtained in the same manner as in Example 9 except that the foamed acrylic-resin object obtained in Comparative Example 4 was used.

<Evaluation of appearance of fiber-reinforced composite>

The appearance of the obtained fiber-reinforced composites was visually observed, and the appearance of the fiber-reinforced composites was evaluated based on the following evaluation criteria.

[Evaluation criteria]

A: The fiber-reinforced composite had two or less linear or spot-like recesses due to wrinkles or air accumulation.

B: The fiber-reinforced composite had three or four linear or spot-like recesses due to wrinkles or air accumulation.

C: The fiber-reinforced composite had five or more linear or spot-like recesses due to wrinkles or air accumulation.

The evaluation of appearance was performed on the obtained fiber-reinforced composites.
The obtained results are listed in Table 2.

[Table 2]

| | | Example 9 | Example 10 | Example 11 | Example 12 | Example 13 | Example 14 | Example 15 | Example 16 | Comparative Example 5 | Comparative Example 6 | Comparative Example 7 | Comparative Example 8 |
|---|---|---|---|---|---|---|---|---|---|---|---|---|---|
| Foamed acrylic-resin object | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
| Evaluation results | Appearance | A | A | A | A | A | A | A | A | C | C | B | B |

Based on the results listed in Table 2, it was confirmed that all of the fiber-reinforced composites obtained by using the foamed acrylic-resin objects of Examples 1 to 8 to which the present invention was applied had excellent appearance.

It was confirmed that the fiber-reinforced composites obtained by using the foamed acrylic-resin objects of Comparative Examples 1 to 4 had poor appearance.

Industrial Applicability

According to the present invention, it is possible to provide a foamed acrylic-resin object having excellent processing suitability, light transmitting properties, appearance, and mechanical strength.

Reference Signs List

    1: foamed acrylic-resin object
    2: fiber-reinforced plastic

**Claims**

1. A foamed acrylic-resin object,
   wherein a heat-resistant temperature measured according to the following measuring process A is 170°C or higher, and
   the number of bubbles respectively having a major diameter of 2 mm or greater which is measured according to the following measuring process B is 2.0 or less per area of 10 cm × 10 cm.
   <Measuring process A>
   A foamed acrylic-resin object a size of 7 mm (length) × 7 mm (width) × 2 mm (thickness) is used as a test piece. A thermomechanical analyzer is used and a quartz probe which has a tip with a diameter of 3 mm is used as an indenter. In a compression test mode, an indenter with a load of 100 mN is applied in the thickness direction of the test piece, and the test piece is heated at a temperature rising rate of 5°C/min from 30°C. The temperature at which 10% of the thickness of the test piece is reduced due to contraction compared to the thickness of the test piece before the test is started is measured.
   <Measuring process B>
   A foamed acrylic-resin object having a side with a size of 10 cm or greater is used as a test piece. Cross sections of the test piece in three directions orthogonal to one another are observed using a scanning electron microscope to acquire the total number of bubbles respectively having a major diameter of 2 mm or greater, and the average value per area of 10 cm × 10 cm is acquired.

2. The foamed acrylic-resin object according to claim 1,
   wherein the foamed acrylic-resin object is obtained by polymerizing and foaming a polymerizable solution which contains a polymerizable monomer component containing an acrylic monomer, a thermally decomposable foaming agent, a polymerization initiator, and a plasticizer,
   the content of (meth)acrylic acid contained in the polymerizable monomer component is in a range of 30% to 70% by mass with respect to the total mass of the polymerizable monomer component, and
   the plasticizer is at least one compound selected from the group consisting of sulfonic acid ester, adipic acid ester, and citric acid ester.

3. The foamed acrylic-resin object according to claim 1 or 2,
   wherein the average bubble diameter is in a range of 0.05 to 0.30 mm.

4. The foamed acrylic-resin object according to claim 2,
   wherein the content of the plasticizer contained in the polymerizable solution is in a range of 0.1 to 20 parts by mass with respect to 100 parts by mass of the polymerizable monomer component.

5. The foamed acrylic-resin object according to claim 2,
   wherein the polymerizable monomer component contains maleic anhydride and (meth)acrylamide.

6. A fiber-reinforced composite comprising:

   the foamed acrylic-resin object according to any one of claims 1 to 5; and
   fiber-reinforced plastic.

7. A process for producing a foamed acrylic-resin object, comprising:

   polymerizing a polymerizable solution that contains a polymerizable monomer component containing an acrylic monomer, a thermally decomposable foaming agent, a polymerization initiator, and a plasticizer to obtain a foamable polymer; and
   foaming the foamable polymer,
   wherein the content of (meth)acrylic acid contained in the polymerizable monomer component is in a range of 30% to 70% by mass with respect to the total mass of the polymerizable monomer component, and
   the plasticizer is at least one compound selected from the group consisting of sulfonic acid ester, adipic acid ester, and citric acid ester.

8. The process for producing a foamed acrylic-resin object according to claim 7,
   wherein the content of the plasticizer contained in the polymerizable solution is in a range of 0.1 to 20 parts by mass with respect to 100 parts by mass of the polymerizable monomer component.

9. The process for producing a foamed acrylic-resin object according to claim 7,
   wherein the polymerizable monomer component contains maleic anhydride and (meth)acrylamide.

10. A sports product comprising:
    the foamed acrylic-resin object according to any one of claims 1 to 5.

11. A vehicle member comprising:
    the foamed acrylic-resin object according to any one of claims 1 to 5.

FIG. 1

1

FIG. 2

2

1

2

# FIG. 3

## INTERNATIONAL SEARCH REPORT

| International application No. |
|---|
| PCT/JP2016/069272 |

**A. CLASSIFICATION OF SUBJECT MATTER**
*C08J9/04*(2006.01)i, *B32B5/28*(2006.01)i, *B32B27/30*(2006.01)i, *C08F2/44* (2006.01)i, *C08F20/02*(2006.01)i

According to International Patent Classification (IPC) or to both national classification and IPC

**B. FIELDS SEARCHED**

Minimum documentation searched (classification system followed by classification symbols)
C08J9/04, B32B5/28, B32B27/30, C08F2/44, C08F20/02

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-009285 A (Sekisui Plastics Co., Ltd.), 20 January 2014 (20.01.2014), entire text; particularly, claims; paragraphs [0002] to [0006], [0018], [0026], [0028] to [0034] (Family: none) | 1-11<br>1-11 |
| X<br>Y | JP 2015-067704 A (Sekisui Plastics Co., Ltd.), 13 April 2015 (13.04.2015), entire text; particularly, claims; paragraphs [0002] to [0006], [0018], [0032] to [0037], [0049] to [0055] (Family: none) | 7-9<br>1-11 |

[X] Further documents are listed in the continuation of Box C.   [ ] See patent family annex.

| | |
|---|---|
| \*   Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 17 August 2016 (17.08.16) | 30 August 2016 (30.08.16) |

| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/069272

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2013-194173 A　(Sekisui Plastics Co., Ltd.), 30 September 2013 (30.09.2013), entire text; particularly, claims; paragraphs [0002] to [0007], [0034] (Family: none) | 1-5,10,11 |
| Y | JP 2013-194174 A　(Sekisui Plastics Co., Ltd.), 30 September 2013 (30.09.2013), entire text; particularly, claims; paragraphs [0002] to [0007], [0028] to [0033] (Family: none) | 1-5,10,11 |
| Y | JP 2006-045256 A　(Sekisui Chemical Co., Ltd.), 16 February 2006 (16.02.2006), entire text; particularly, claims (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015177633 A
- JP 2014009285 A
- JP 2013227493 A